# EUROPEAN PATENT APPLICATION

(11) **EP 4 745 464 A2**
(43) Date of publication of application: **20.05.2026**
(21) Application number: 25215613.8
(22) Date of filing: 13.11.2025
(51) Int. Cl.: F24C 1/02, A47J 37/06

(54) **OVEN**

(30) Priority: 15.11.2024 GB 202416842
(71) Applicant: Gozney Group Limited, Bournemouth Dorset BH2 5LP (GB)
(72) Inventor: GOZNEY, Thomas Robert Llewelyn, Christchurch, SO41 6DH (GB)
(74) Representative: Haseltine Lake Kempner LLP

(57) **Abstract**

There is disclosed an open-flame oven comprising a housing defining a cooking chamber, and a substantially continuous floor comprising a floor surface of the cooking chamber. The housing further defines a secondary chamber below the substantially continuous floor and an airflow duct configured to permit airflow from the secondary chamber to the cooking chamber. An inlet opening of the airflow duct is arranged to receive air from the secondary chamber and an outlet opening of the airflow duct is configured to expel air into the cooking chamber. Also disclosed is a blower module for an open-flame oven.

## Description

### Technical Field

The present disclosure relates to ovens and, in particular, open-flame ovens.

### Background

Ovens for cooking or curing foodstuffs are known. Some such ovens are known as open-flame ovens, meaning they are heated by an open flame or fire. It will be appreciated that further developments to increase the efficiency and overall performance of ovens would be desirable.

### Summary

According to a first aspect, there is provided an open-flame oven. The open-flame oven comprises a housing defining a cooking chamber, and a substantially continuous floor comprising a floor surface of the cooking chamber. The housing further defines a secondary chamber below the substantially continuous floor. The oven further comprises an airflow duct configured to permit airflow from the secondary chamber to the cooking chamber, wherein an inlet opening of the airflow duct is arranged to receive air from the secondary chamber and an outlet opening of the airflow duct is configured to expel air into the cooking chamber.

The secondary chamber may extend beneath substantially all of a bottom surface of the substantially continuous floor. The outlet opening may be formed in a side wall of the oven. The outlet opening may not be formed in or through the substantially continuous floor.

The airflow duct may reduce in cross-sectional area between the inlet opening and the outlet opening. There may be a first portion of the airflow duct adjacent the inlet opening, which may also extend substantially vertically, and a second portion of the airflow duct adjacent the outlet opening, which may also extend substantially horizontally. The first portion may have a first cross sectional area, and the second portion may have a second cross sectional area smaller than the first cross sectional area. In this way, airflow in the duct may increase in velocity between the inlet and the outlet, to provide a focused jet of air at the outlet opening.

The substantially continuous floor may be formed from a plurality of separate floor elements, such as bricks, blocks, or plates, which conform at their edges to form a substantially continuous floor surface. The substantially continuous floor may be substantially impermeable. The floor may be formed from metal, stone, or ceramic. The floor may have a thickness of more than 5mm or more than 10mm. In some examples, the floor may have a thickness of approximately 8mm.

The outlet opening of the airflow duct may be arranged proximate the floor surface.

The outlet opening of the airflow duct may be arranged to expel air in a direction substantially parallel to the floor surface, such that airflow from the outlet opening is directed across the floor surface.

During operation of the open-flame oven, heat from the cooking chamber may be conducted through the floor, causing air in the secondary chamber to be heated.

The outlet opening of the airflow duct may be arranged at a periphery of the floor surface. The outlet opening of the airflow duct may be arranged at the base of an upright peripheral wall of the cooking chamber.

The secondary chamber may be in communication with the ambient environment outside the housing, such that air from the ambient environment can be drawn into the secondary chamber to replace air drawn into the airflow duct from the secondary chamber.

The housing may further comprise an oven mouth for the cooking chamber, the cooking chamber and the floor surface extending rearwardly from the oven mouth within the housing. The outlet opening of the airflow duct may be arranged at a lateral side of the floor surface with respect to the oven mouth.

The oven may further comprise a fuel rack configured to be disposed on the floor surface. The fuel rack may have a support surface for supporting solid fuel above the floor surface. An airflow passage may be formed between the support surface and the floor surface.

The support surface may be perforated. The fuel rack may be shaped to conform to the lateral walls of the oven.

The outlet opening of the airflow duct is positioned so as to expel air into the airflow passage.

The outlet opening of the duct may comprise a grating. The opening and/or the grating may be arranged proximate to the floor surface and configured to direct airflow from the duct into the combustion region substantially parallel to the floor surface. The grating may comprise a plurality of openings configured to direct airflow across the floor surface of the floor.

The oven may comprise a baffle arranged in the duct. The baffle may be arranged in the duct adjacent the outlet opening. The baffle may be configured so as to inhibit back flow of air or flame in the duct. The baffle may be formed integrally with the grating. The baffle may be a curved plate which extends generally upstream in the duct, towards the outlet opening.

The open-flame oven may further comprise a blower disposed in fluid communication with the airflow duct to force airflow through the airflow duct.

The blower may be configured to receive air from the secondary chamber at a blower inlet of the blower and expel air at a blower outlet of the blower.

The blower inlet may be disposed on a first face of the blower and the outlet is disposed on a second face of the blower. The second face may be adjacent to, and perpendicular to the first face. In use, the first face may be a substantially vertical inward-facing face, and the second face may be a substantially horizontal upwardly-facing face.

The blower may further comprise a controller. The controller may be configured to: vary a speed of the blower in response to receiving a blower speed command from a user; and/or temporarily increase a speed of the blower to a defined speed and for a defined time duration in response to receiving a blower speed boost command from a user.

The blower may be comprised in a blower module. The blower module may be a detachable component of the open-flame oven. The blower module may be configured to detachably engage the housing of the open-flame oven.

The open-flame oven may comprise a component port formed in an exterior of the housing. The component port may be in communication with the airflow duct. The open-flame oven may further comprise a removable blanking component configured to block the component port. The open-flame oven may further comprise a removable blower module configured to be connected to the component port. The removable blower module and the banking component may be interchangeably connectable to the component port.

The blower module may be receivable in the component port. The blower module may be substantially flush with the exterior of the housing when received in the component port.

The floor surface may comprise a combustion region and a cooking region. The combustion region may be arranged adjacent the outlet opening of the airflow duct. The combustion region may be configured to accommodate flammable fuel.

The open-flame oven may further comprise a gas-fuel and/or liquid-fuel burner configured to heat the cooking chamber.

The gas-fuel or liquid-fuel burner may be arranged adjacent a first lateral wall of the cooking chamber. The outlet opening of the airflow duct may arranged adjacent a second lateral wall of the cooking chamber opposite the first lateral wall.

The burner and the outlet opening may be arranged on the left and right sides of the cooking chamber respectively with respect to the oven mouth, or vice versa.

According to a second aspect, there is provided a blower module for an open-flame oven. The blower module is connectable to a component port of a housing of the open-flame oven. The blower module comprises a blower inlet configured to be arranged within the housing of the open-flame oven whilst the blower module is connected to the component port, the blower inlet being configured receive air directly or indirectly from an internal chamber of the open-flame oven arranged below an oven floor. The blower module further comprises a blower outlet configured to be arranged within the housing of the open-flame oven whilst the blower module is connected to the component port, the blower outlet being arranged above the blower inlet and configured to expel air directly or indirectly into a cooking chamber of the open-flame oven arranged above the oven floor. The blower module further comprises a blower configured to force air through the blower module from the blower inlet to the blower outlet, to thereby force air from the internal chamber into the cooking chamber.

The blower module may be configured to be received in the component port of the open-flame oven. The blower module may comprise an external face configured to be arranged flush with the oven housing whilst the blower module is received in the component port. The external face may comprise a fascia.

The blower module a control interface for controlling the operation of the blower. The control interface may be formed on the external face. The control interface may comprise manual blower controls configured to manually adjust a speed of the blower, such as a control knob. The control interface may comprise an override or boost function configured to increase a blower speed to its maximum for a predetermined time period. After the predetermined time period, the blower may return to the blower speed as set by the manual blower controls.

The blower module may be substantially cuboidal. The blower module may comprise one or more faces configured to be arranged within the oven housing in use, and the external face configured to be arranged externally on the oven housing. The external face may comprise a peripheral flange which extends away from the body of the blower module and thereby forms at least a partial seal with the oven housing. The component port of the oven may be shaped to conform to the body of the blower module.

The blower inlet may be formed on an opposing face of the blower module to the external face. The blower outlet may be formed on a top face of the blower module arranged between the opposing face and the external face.

According to a further aspect, there is provided a combination of an open-flame oven and a blower module in accordance with the first and second aspects.

### Brief Description of the Drawings

Arrangements of the invention will now be described, by way of example, and with reference to the accompanying drawings, in which:

### Detailed Description of the Drawings

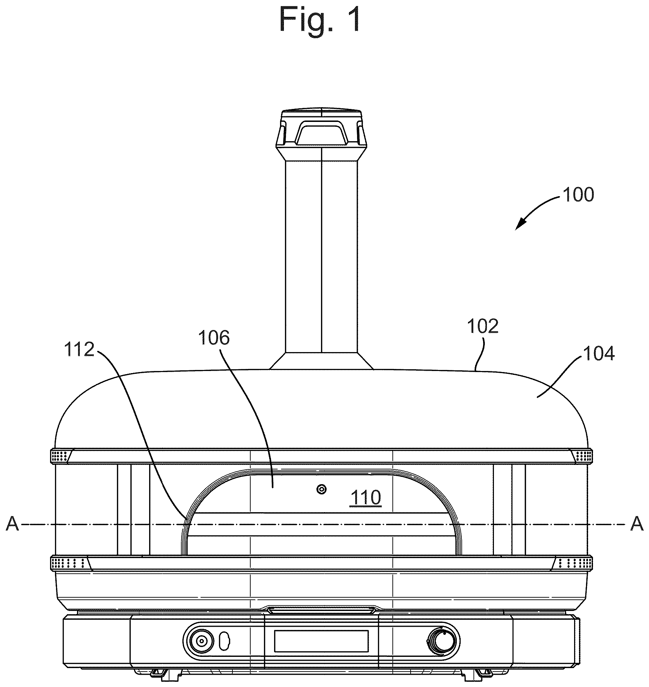

**Figure 1** shows an open-flame oven 100 according to the principles of the present disclosure. In this example, the oven may be a domestic oven for use by domestic chefs or a commercial oven for use by professional chefs, but it should be understood that the principles of this disclosure can be applied to many different types of oven. The term "open flame" should be understood to mean that the heating of the oven is provided by an open flame, such as a gas burner, a liquid fuel burner, and/or a solid fuel fire.

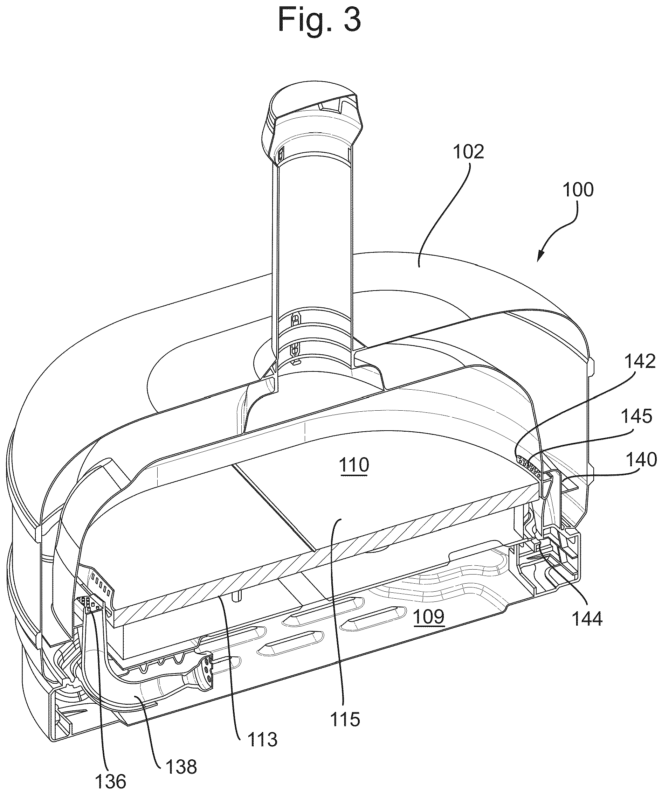

The oven 100 comprises an oven housing 102. The housing 102 comprises an exterior layer 104 and an interior layer 106 (for more detail, see Figure 3) which forms peripheral walls of the cooking chamber 110. Accordingly, the oven housing 102 is a dual-layer oven housing. The dual-layer housing construction provides an internal insulating cavity 108 (see Figure 3) which assists in preventing the exterior layer 104 from becoming excessively hot during cooking, which would represent a severe burn risk.

The internal layer 106 defines a cooking chamber 110 for containing foodstuffs during cooking or curing. The cooking chamber 110 is formed internally within the oven 100. The housing 102 comprises an oven mouth 112 formed at a front of the oven chamber 110 which provides access to the oven chamber 110 to insert and remove foodstuffs to be cooked or cured. The oven 100 may further comprise a door (not shown) to optionally close the oven mouth 112 and/or seal the oven chamber 110, which may be required for certain cooking or curing methods.

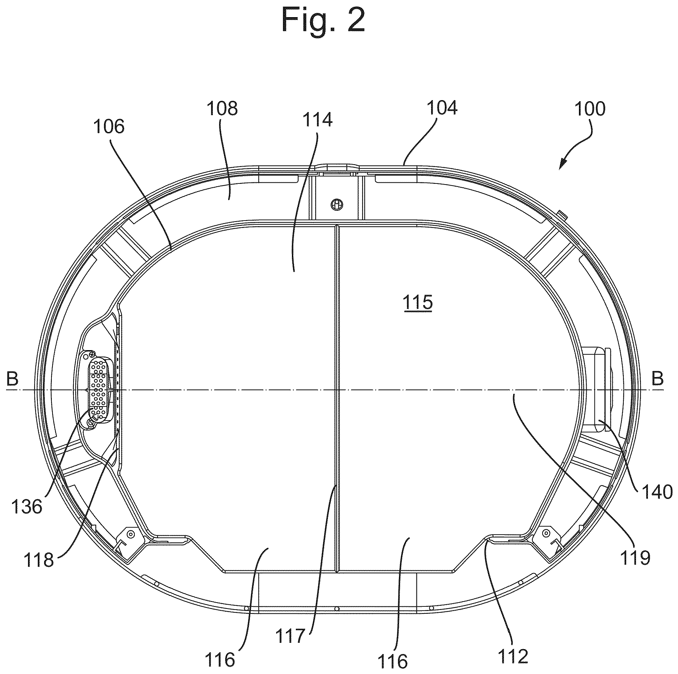

**Figure 2** shows a cross-sectional plan view of the oven 100 on the plane A-A in Figure 1. As can be appreciated in this view, the oven chamber 110 has an oven floor 114 which forms a floor surface 115 of the oven chamber 110. The oven floor 114 is configured to be arranged in a substantially horizontal plane in use, so as to provide a support surface for supporting foodstuffs to be cooked or cured in the oven chamber. The oven floor 114 provides the upper floor surface 115 and a lower bottom surface 113 (shown in Figure 3) on opposing sides of the floor 114. The floor 114 is substantially continuous. The oven floor 114 is a stone floor in this example, but it could alternatively be constructed from metal, ceramic, or other materials with substantial thermal mass. Ovens of this type typically have thick continuous floors which absorb heat from the energy source of the oven such that the underside of foodstuffs (such as pizza) can be heated efficiently. In other examples, the oven floor may be formed from other materials. The floor 114 may have a thickness of more than 5mm or more than 10mm. In this example, the floor 114 may have a thickness of approximately 8mm.

It will be appreciated, that as the oven floor 114 is heated by the energy source of the oven 100, heat will conduct through the oven floor 114 from the upper floor surface 115 towards the bottom surface 113. Given enough time, the oven floor 114 may become heat saturated. During heat saturation, the floor surface 115 and the bottom surface 113 have substantially the same temperature, or the temperature gradient between the floor surface 115 and the bottom surface 113 may reach a substantially constant value.

In this example, the oven floor 114 is formed from two oven floor plates 116 which abut at a central line 117 which extends from the front of the oven 100 at the oven mouth 112 to the back of the oven 100. Although the oven floor 114 is formed from multiple plates or pieces, it should be understood that these separate floor parts combine to form a substantially continuous and flat floor surface. In other examples, the oven floor 114 may be formed from a single plate. The continuous surface may be formed from more than one floor panel, but there may be essentially no gaps between separate panels of the oven floor 114. Substantially all of the floor surface 115 is available to support foodstuffs for cooking, and particularly foods with a large surface area such as pizza.

It should be appreciated that there are many types of processes which can come under the term "cooking" and "curing". In the context of the present disclosure, these terms should be understood to encapsulate various methods of treating foodstuffs in the oven by applying energy to them from an energy source. For example, other than simply heating, cooking may include (but is not limited to) heating, roasting, steaming, or baking foodstuffs. Further, curing may include (but is not limited to) hot-smoking, cold-smoking, or dehydrating foodstuffs.

As can be appreciated in the plan view of Figure 2, the oven floor 114 comprises a notched portion 118 which sits adjacent to a gas burner 136 for cooking or curing foodstuffs in the oven chamber 110. The notched portion 118 is arranged on a left side of the oven floor 114 (when viewed from the front) adjacent the peripheral edge of the oven chamber 110.

The gas burner 136 burns flammable gas to introduce heat energy (and possibly smoke) into the oven chamber 110. In this example, the gas burner 136 is permanently fixed within the oven 100 adjacent the notched portion 118. The gas burner 136 is connected via a gas conduit 138 to a gas fuel source, such as a gas canister, or mains gas supply (not shown). In other examples, such as solid fuel only versions of the oven, the gas burner 136 and related features like the notched portion 118 may not be provided. In yet further examples, an alternative gas or liquid-fuel burner may be provided in an alternative location in the cooking chamber 110 for heating.

The oven floor 114 is substantially impermeable. Accordingly, energy from the energy sources will predominantly pass into the oven chamber 110.

An opposite side of the oven floor 114 (on the right side of the oven floor 114 when viewed from the oven mouth), is adjacent to the outlet opening of an airflow duct 140. The portion of the oven floor 114 proximate the duct 114 may be referred to as a combustion region 119, where a solid-fuel fire may be constructed for effective burning and heating of the cooking chamber 110.

A fire such as a wood fire (or other non-gas-fuel fire) may be built in the non-gas fuel combustion region 119 to introduce heat energy (and possibly smoke) into the oven chamber 110.

The notched portion 118 and the combustion region 119 are spaced apart across the oven floor 114 on opposing sides of the oven mouth 112. This conveniently arranges the apertures away from the central area of the oven floor 114, which provides improved area for supporting foodstuffs.

It will be appreciated that the oven 100 can be heated by the gas burner 136 and/or by a fire built in the combustion region. A user may select their preferred heat source based on, for example, the foodstuff they are planning to cook and the cooking environment required. Some embodiments applicable to the present invention may not include a gas burner 136 and may only include a combustion region for building a non-gas fire.

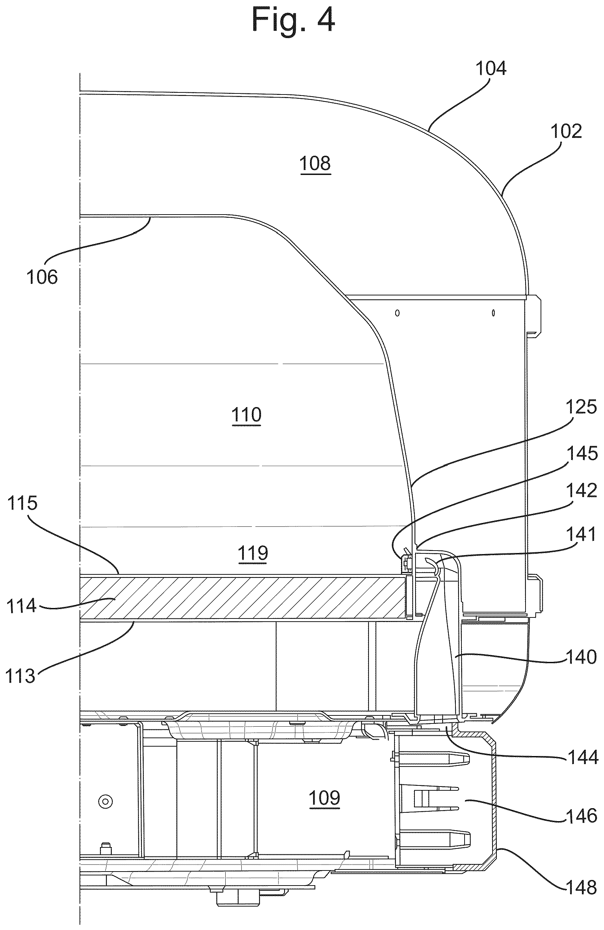

**Figure 3** shows a frontal, perspective cross-section of the oven 100 on the plane B-B shown in Figure 2. **Figure 4** shows a detailed frontal cross-section of the airflow duct 140 and the surrounding porting of the oven 100. As can be seen in these Figures, the duct 140 provides fluid communication for air in an area below the floor 114 to travel into the oven chamber 110. The area below the oven floor 114 is referred a secondary chamber 109. The airflow duct 140 is configured to permit airflow from the secondary chamber 109 to the cooking chamber 110. An inlet opening 144 of the airflow duct 140 is arranged to receive air from the secondary chamber 109 and an outlet opening 142 of the airflow duct 140 is configured to expel air into the cooking chamber 110.

Figure 3 shows the positioning of an outlet opening 142 of the duct 140 in relation to the floor 114. As can be seen, the outlet opening 142 is arranged in the interior layer 106 of the housing 102, and more specifically in the peripheral (e.g., side) wall 125 of the cooking chamber 110. In this example, the outlet opening 142 is arranged at the base of the upright peripheral wall 125 of the cooking chamber 110. This positioning of the outlet opening 142 means that it is proximate the first surface 115 of the floor 114 with very little (if any) vertical distance therebetween. Furthermore, the opening 142 has a substantially horizontal aspect ratio (relative to an upright position of the oven), meaning its width is greater than its height. The airflow from the duct 140 is therefore directed across the floor surface 115 (i.e. substantially parallel to the floor surface 115), rather than, for example, perpendicular to the surface or upwardly into the centre of the cooking chamber 110. Consequently, a significant forced airflow from the duct 140 is concentrated in the combustion region 119, where a solid fuel fire can be built.

In this example, the outlet opening 142 of the duct 140 comprises a grating 145. The grating 145 comprises plurality of openings configured to direct airflow from the duct 140 across the floor surface 115 of the floor. The grating 145 may further encourage smooth airflow across the floor surface 115 at the base of any adjacent fire, and may prevent debris from entering the duct 140, which could cause a blockage or a restriction of the duct. The grating 145 may be removable for cleaning and maintenance.

As shown in Figure 4, the duct 140 may have a baffle 141 arranged adjacent the outlet opening 142, so as to inhibit back flow of air or flame in the duct 140. In some examples, the baffle 141 may be formed integrally with the grating 145. The baffle 141 in this example is a curved plate which extends generally upstream in the duct 140 (i.e. towards the outlet opening 142).

It will be appreciated in Figure 4 that the airflow duct 140 reduces in cross-sectional area between the inlet opening 144 and the outlet opening 142. There is a first portion 147 of the airflow duct 140 adjacent the inlet opening 144, which extends substantially vertically, and a second portion 149 of the airflow duct 140 adjacent the outlet opening 142, which extend substantially horizontally. The first portion 147 has a first cross sectional area, and the second portion 149 has a second cross sectional area smaller than the first cross sectional area. In this way, airflow in the duct 140 increases in velocity between the inlet and the outlet, to provide a focused jet of air at the outlet opening 142.

With reference to Figure 4, the secondary chamber 109 can be seen clearly below the floor 114. The airflow duct 140 has an inlet opening 144 which is open to the secondary chamber 109. The inlet opening 144 is configured draw air into the duct 140 from the secondary chamber 109. As the inlet opening 144 is arranged below the floor 114 and the outlet opening 142 is arranged above the floor 114, the airflow duct 140 extends generally vertically adjacent the peripheral edge of the floor 114 to transport air from the secondary chamber 109 to the cooking chamber 110.

It will be appreciated that, when a fire is burning in the combustion region 119 adjacent the outlet opening 142, the fire will naturally draw in air for combustion and form convention currents in the cooking chamber 110, which will in turn induce air to be drawn into the cooking chamber through the nearby outlet opening 142. Therefore, even without any active blower provided, airflow is passively drawn from the secondary chamber 109 via the duct 140 when a fire is burning in the combustion region 119. This passive airflow will in turn provide improved oxygenation of the fire, thereby improving combustion efficiency and increasing temperatures in a passive manner, and further driving passive airflow through the duct.

As already mentioned above, it should be appreciated that when the oven is in use, the heat in the cooking chamber 110 indirectly heats the air in the secondary chamber 109. Air in the secondary chamber 109 is therefore at a higher temperature than the air in the ambient environment. As the airflow duct 140 draws in air from the secondary chamber 109 rather than the ambient environment, the airflow provided via the duct 140 is effectively pre-heated. Providing pre-heated air to the fire rather than colder, ambient temperature air, the fire's combustion efficiency may be yet further improved. It will be appreciated that the secondary chamber 109 is in communication with the ambient environment outside the housing 102, such that air from the ambient environment can be drawn into the secondary chamber 109 (and passively pre-heated) to replace the air drawn into the airflow duct 140. In this example, the secondary chamber 109 extends beneath substantially the entire bottom surface 113 of the floor 114 to maximise the floor area available to heat air in the secondary chamber 109.

In the example of Figures 3 and 4, the oven 100 is provided with a component port 146 for receiving a removable component. The component port 146 is an opening formed in the exterior layer 104 of the housing 102 and arranged adjacent the inlet opening 144 of the airflow duct 140. In the Figure 3 and 4 example, the component port 146 is not in use, and is capped off with a removable blanking component 148, which blocks the component port 146 whilst it is not in use so that air is not drawn directly from the ambient environment into the airflow duct 140. The blanking component 148 comprises an exterior face 150 which conforms to the neighboring region of the housing 102 and disguises the component port 146.

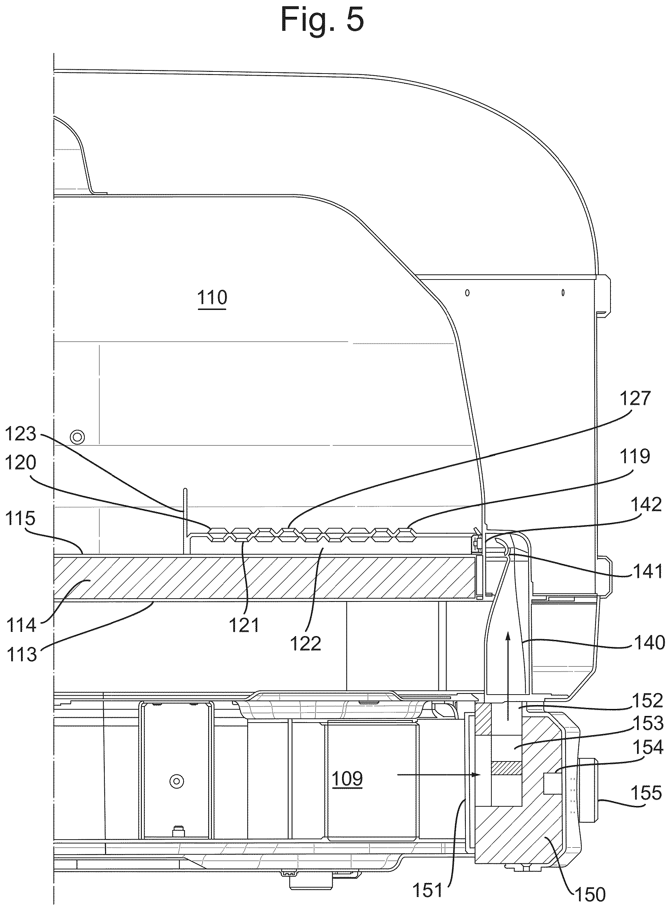

Turning now to **Figure 5****,** an alternative configuration of the oven 100 is shown. In this configuration, the oven 110 also comprises two optional additional features, a fuel rack 120 and a blower 150. Each of these features can be utilized independently, so it should be understood that the present disclosure also comprises two further configurations of the oven 100, having just the additional fuel rack 120 or just the additional blower 150.

The fuel rack 120 shall be described first. In this example, the fuel rack 120 is configured to be arranged in the combustion region 119. The fuel rack 120 is configured to support fuel and/or a built fire apart from (i.e., above) the floor surface 115. To this end, the fuel rack 120 has a support surface 121 for supporting solid fuel above the floor surface 115. This spacing of the support surface 121 and the floor surface 115 provides an airflow passage 122 therebetween. The support surface 121 is perforated, in this example with apertures 127. Furthermore, the fuel rack 120 is shaped to conform to the interior walls of the oven, so as to form a suitable location for a solid fuel (e.g., wood) fire adjacent to the cooking chamber walls. The fuel rack 120 also comprises a retaining wall 123 for retaining solid fuel on the fuel rack 120 and prevent fuel from falling onto the floor surface 115.

In this example, the airflow passage 122 formed between the floor 114 and the fuel rack 120 is arranged adjacent to the outlet opening 142 of the airflow duct, such that the outlet opening 142 positioned so as to expel air directly into the airflow passage 122. This may provide particularly good airflow from the duct 140 directly into the base of a fire built upon the support surface 121, as the fire will be directly fed air from beneath via the apertures 127 in the support surface 121. The fuel rack 120 may provide improved airflow to a fire with or without a blower 150.

Referring now to Figures 5, 6, 7A, and 7B, the blower 150 will be described in more detail.

In this alternative configuration, the open-flame oven 100 comprises a blower 150, which is disposed in fluid communication with the airflow duct 140 to force airflow through the airflow duct 140. In this example, the blower 150 is comprised in a blower module 250, which is a detachable component of the open-flame oven 100 that can optionally be used depending upon the user requirements. The blower module 150 shall be described in more detail below. However, it should be appreciated that a blower, if provided, may alternatively be provide as a permanent component of the oven rather than a removable component or module.

The blower 150 is an air-moving device. The blower 150 is configured to receive air from the secondary chamber 109 at a blower inlet 151 of the blower 150 and expel air at a blower outlet 152 of the blower 150. The blower 150 may be or may comprise a fan, such as a centrifugal, axial, or blower fan. In this example, the blower 150 comprises a centrifugal fan 153. The blower 150 is arranged at the inlet opening 144 of the airflow duct 140, such that air from the secondary chamber 109 enters the blower inlet 151 and is directly received into the inlet opening 144. Therefore, the inlet opening of the duct 140 is not directly exposed to the secondary chamber 109. In other examples, the blower 150 may be arranged at another location with respect to the duct, such as at intermediate location in the airflow duct 140, such that the inlet opening 144 of the duct 140 is directly exposed to the secondary chamber 109. Either way, it should be understood that the inlet opening 144 of the duct 140 receives air from the secondary chamber 109 either directly or indirectly via the blower 150, which itself is directly connected to the secondary chamber 109.

The blower 150 comprises a controller 154. The controller 154 is configured to control a speed of the blower 150. The controller 155 in this example has a user interface 155. More specifically in this example, the controller 155 is configured to perform two functions. Firstly, the controller 154 is configured vary a speed of the blower in response to receiving a blower speed command from a user via the user interface 155. In this example, the user interface 155 comprises a turnable knob 155a which can be rotated by a user to select a desired blower speed. Secondly, the controller 154 is configured to temporarily increase the speed of the blower to its maximum speed for a defined time duration in response to receiving a blower speed boost command from a user via the interface 155. This may be known as a boost function. The interface comprises a button 155b arranged centrally on the knob 155b for initiating the boost function. Alternatively, the button 155b may be activated by pushing the entire knob 155b axially. The defined time for the boost function may be 60 seconds, or some other preset time period. The time period may be user-adjustable. After the defined time period, the blower 150 may return to the blower speed as set by the knob 155a.

The interface 155 may comprise a power control for turning the blower 150 on or off. In this example, the button 155b may serve the dual function of power control and boost function. For example, a long press on the button 155b may provide power control, while a short press (while the blower is powered on) may initiate or cease the boost function.

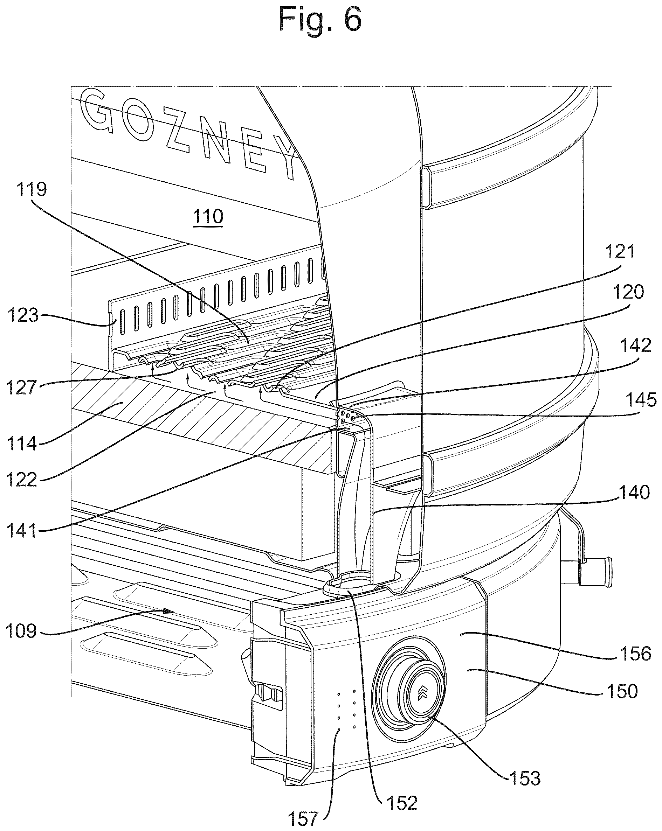

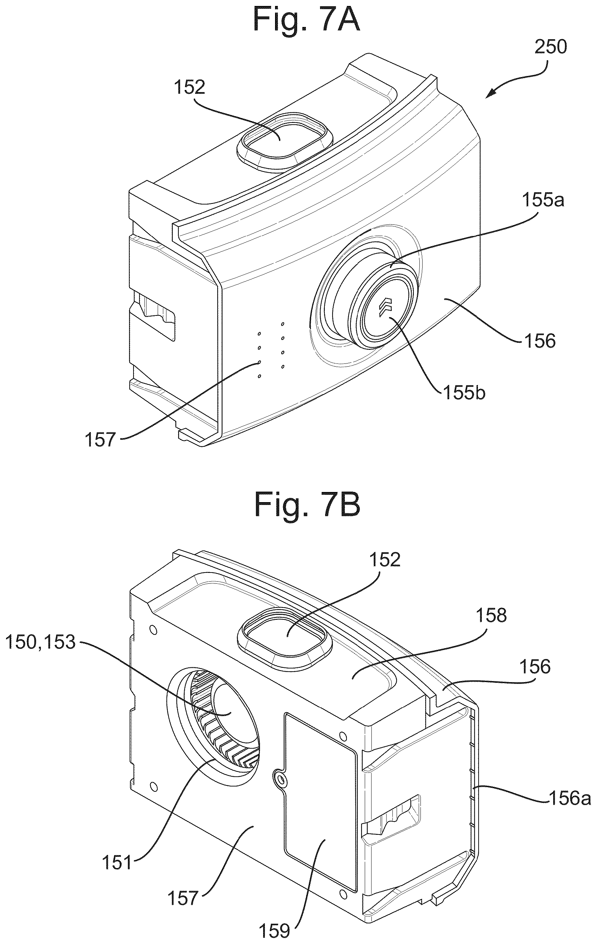

As mentioned above, the blower 150 is comprised in a removable blower module 250 in this example. Figure 6 shows a cutaway perspective view of the blower module 250 in situ in the component port 146 of the oven 100. Figure 7A shows as front perspective view of the blower module 250 in isolation, and Figure 7B shows a corresponding rear perspective view of the blower module 250.

It should be understood that, in this example, the removable blower module 150 and the blanking component 148 are interchangeably connectable to the component port 146 of the oven 100. Therefore, the oven 100 may be used with or without the blower 150. Of course, in other examples, the blower 150 may be a permanent component of the oven 100, which may be simply turned off if not required.

As will be appreciated best in Figures 5 and 6, the blower module 150 is configured to be received in the component port 146 of the open-flame oven 100. The body of the blower module 250 has an external shape which generally conforms to the internal shape of the component port 146. The blower module 250 and the component port 146 may have retaining features which releasably secure the blower module 250 in the component port 146. In this example, the blower module 250 is substantially cuboidal, and the component port 146 is likewise substantially cuboidal. As the blower module 250 is configured to be received within the component port 146, the blower module has five faces that are configured to be arranged within the oven housing (and specifically the component port 146) in use, and an external face 156 configured to be arranged externally in use.

In this example, the blower module comprises an external face 156, i.e. fascia, which is arranged flush with the surrounding portion of the oven housing 102 whilst the blower module 250 is in situ. This provides a clean aesthetic, minimizes the possibility of the module accidentally being displaced in use, and also provides some sealing function to prevent cold ambient air entering the blower 150 and the duct 140. The external face 156 comprises a simple display 155c configured to display basic information about the blower's operation, such as current speed and battery life. The external face 156 also comprises a peripheral flange 156a which extends away from the body of the blower module 250 at the peripheral edge of the external face 156. This flange 156a may thereby forms at least a partial seal with the adjacent portion of the oven housing 102 and inhibit leakage of air blown by the blower 150 and/or prevent ingress of cold ambient air into the blower 150.

It should be noted that the blower inlet 151 of the blower module 250 is configured to be arranged within the housing 102 of the open-flame oven 100 whilst the blower module 250 is connected to the component port 146. This configuration ensures that the blower inlet 151 is configured receive air directly or indirectly from the secondary chamber 109 rather than from the ambient environment. Referring to Figure 7B, the blower inlet 151 is arranged on a rear face 157 of the blower module 250, which is opposite the external face 156. Therefore, the blower inlet 151 faces internally into the oven housing 102 and towards the secondary chamber 109 when inserted into the component port 146.

As is best visible in Figures 7A and 7B, the blower module 250 further comprises a blower outlet 152 that is also configured to be arranged within the housing of the open-flame oven whilst the blower module is connected to the component port 146. In this example, the blower outlet is arranged arranged above the blower inlet 151 and is generally configured to expel air directly or indirectly into the cooking chamber 110. The blower outlet 152 in this example is formed on a top face 158 of the blower module, which is arranged between the rear face 157 and the external face 156.It will be appreciated that in use, the rear face 157 is a substantially vertical inward-facing face, and the top face 158 face is a substantially horizontal upwardly-facing face. This configuration may be particularly suited to use of a centrifugal fan as the blower 150.

Overall, it will be appreciated that the blower module 250 comprises the blower 150, and is configured to force air through the blower module 250 from the blower inlet 151 to the blower outlet 152, to thereby force air from the secondary chamber 109 into the cooking chamber 100, when the module 250 is installed in the oven 100. In this example, the blower module has a blower 150 in the form of a centrifugal fan 153, but other types of blower could be utilized, such as an axial fan.

In this example, the blower module 250 is powered by battery. To this end, a battery compartment 159 is provided on the rear face 157 of the blower module 250. In other examples, the blower module 250 may comprise a rechargeable battery and a recharging port, be mains powered, or be powered by some other source, such as a thermoelectric energy source (e.g. Peltier device).

The concepts disclosed above can provide an improved oven operates more intuitively and efficiently. The delivery of air to a fire within the oven in keeping with the principles of the disclosure above may enable a less experienced user to control a wood or solid fuel fire more easily and reliably and thereby provide easier cooking experience. Efficient delivery of air to a fire as set out above can provide various other technical advantages, such as improved combustion efficiency due to improved aspiration of the fire, faster oven pre-heating by enabling a fire to reach higher termperature and size more quickly, enhanced temperature control by delivering focused and controlled airflow to the fire, and reduced fuel consumption by a more efficient and controlled burn. Furthermore, with regards to blowers in keeping with the above disclosure, this may provide a more compact arrangement which is less susceptible to being blocked by debris or other items outside the oven housing. It will be appreciated that the area surrounding the oven may be cluttered with, e.g., cooking paraphernalia in use, and so an inlet for the blower which is arranged within the oven housing itself may provide more reliable operation.

It will be appreciated by those skilled in the art that although the invention has been described by way of example, with reference to one or more exemplary examples, it is not limited to the disclosed examples and that alternative examples could be constructed without departing from the scope of the invention as defined by the appended claims.

For completeness, the present disclosure includes the subject matter set out in the following numbered Clauses:
Clause 1. An open-flame oven comprising:
   a housing defining a cooking chamber, and a substantially continuous floor comprising a floor surface of the cooking chamber, the housing further defining a secondary chamber below the substantially continuous floor; and
   an airflow duct configured to permit airflow from the secondary chamber to the cooking chamber, wherein an inlet opening of the airflow duct is arranged to receive air from the secondary chamber and an outlet opening of the airflow duct is configured to expel air into the cooking chamber.
Clause 2. The open-flame oven of Clause 1, wherein the outlet opening of the airflow duct is arranged proximate the floor surface.
Clause 3. The open flame oven of Clause 1 or 2, wherein the outlet opening of the airflow duct is arranged to expel air in a direction substantially parallel to the first surface of the floor, such that airflow from the outlet opening is directed across the floor surface.
Clause 4. The open-flame oven of any one of the preceding Clauses, wherein during operation of the open-flame oven, heat from the cooking chamber is conducted through the floor, causing air in the secondary chamber to be heated.
Clause 5. The open-flame oven of any one of the preceding Clauses, wherein the outlet opening of the airflow duct is arranged at a periphery of the floor surface.
Clause 6. The open-flame oven of any one of the preceding Clauses, wherein the outlet opening of the airflow duct is arranged at the base of an upright peripheral wall of the cooking chamber.
Clause 7. The open-flame oven of any one of the preceding Clauses, wherein the housing further comprises a oven mouth for the cooking chamber, the cooking chamber and the floor surface extending rearwardly from the oven mouth within the housing, and wherein the outlet opening of the airflow duct is arranged at a lateral side of the floor surface with respect to the oven mouth.
Clause 8. The open-flame oven of Clause 1, further comprising a fuel rack configured to be disposed on the floor surface, the fuel rack having a support surface for supporting solid fuel above the floor surface such that an airflow passage is formed between the support surface and the floor surface.
Clause 9. The open-flame oven of Clause 8, wherein the outlet opening of the airflow duct is positioned so as to expel air into the airflow passage.
Clause 10. The open-flame oven of any of the preceding Clauses, wherein the outlet opening of the duct comprises a grating arranged proximate to the floor surface and configured to direct airflow from the duct into the combustion region substantially parallel to the floor surface, optionally wherein the grating comprises a plurality of openings configured to direct airflow across the first surface of the floor.
Clause 11. The open-flame oven of any of the preceding Clauses, further comprising a blower disposed in fluid communication with the airflow duct to force airflow through the airflow duct.
Clause 12. The open-flame oven of Clause 11, wherein the blower is configured to receive air from the secondary chamber at a blower inlet of the blower and expel air at a blower outlet of the blower assembly.
Clause 13. The open-flame oven of Clause 11 or 12, wherein the blower inlet is disposed on a first face of the blower and the outlet is disposed on a second face of the blower, the second face being adjacent to, and perpendicular to the first face.
Clause 14. The open-flame oven of any one of Clauses 11 to 13, wherein the blower comprises a controller, the controller being configured to:
   vary a speed of the blower in response to receiving a blower speed command from a user; and/or
   temporarily increase a speed of the blower to a defined speed and for a defined time duration in response to receiving a blower speed boost command from a user.
Clause 15. The open-flame oven of any one of Clauses 11-14, wherein the blower is comprised in a blower module, the blower module being a detachable component of the open-flame oven, the blower module being configured to detachably engage the housing of the open-flame oven.
Clause 16. The open-flame oven of any one of the preceding Clauses, wherein the open-flame oven comprises a component port formed in an exterior of the housing, the component port being in communication with the airflow duct, and further comprising a removable blanking component configured to block the component port, and optionally further comprising a removable blower module configured to be connected to the component port, wherein the removable blower module and the banking component are interchangeably connectable to the component port.
Clause 17. The open-flame oven of any of the preceding Clauses, further comprising a gas-fuel or liquid-fuel burner configured to heat the cooking chamber.
Clause 18. The open-flame oven of Clause 17, wherein the gas-fuel or liquid-fuel burner is arranged adjacent a first lateral wall of the cooking chamber, and wherein the outlet opening of the airflow duct is arranged adjacent a second lateral wall of the cooking chamber opposite the first lateral wall.
Clause 19. A blower module for an open-flame oven, the blower module connectable to a component port of a housing of the open-flame oven, the blower module comprising:
   a blower inlet configured to be arranged within the housing of the open-flame oven whilst the blower module is connected to the component port, the blower inlet being configured receive air directly or indirectly from an internal chamber of the open-flame oven arranged below an oven floor;
   a blower outlet configured to be arranged within the housing of the open-flame oven whilst the blower module is connected to the component port, the blower outlet being arranged above the blower inlet and configured to expel air directly or indirectly into a cooking chamber of the open-flame oven arranged above the oven floor; and
   a blower configured to force air through the blower module from the blower inlet to the blower outlet, to thereby force air from the internal chamber into the cooking chamber.
Clause 20. The blower module of Clause 19, wherein the blower module is configured to be received in the component port of the open-flame oven whilst in use, optionally wherein the blower module comprises an external face configured to be arranged flush with the oven housing whilst the blower module is received in the component port.

## Claims

1. An open-flame oven comprising:
a housing defining a cooking chamber, and a substantially continuous floor comprising a floor surface of the cooking chamber, the housing further defining a secondary chamber below the substantially continuous floor; and
an airflow duct configured to permit airflow from the secondary chamber to the cooking chamber, wherein an inlet opening of the airflow duct is arranged to receive air from the secondary chamber and an outlet opening of the airflow duct is configured to expel air into the cooking chamber.

2. The open-flame oven of claim 1, wherein the outlet opening of the airflow duct is arranged proximate the floor surface.

3. The open flame oven of claim 1 or 2, wherein the outlet opening of the airflow duct is arranged to expel air in a direction substantially parallel to the first surface of the floor, such that airflow from the outlet opening is directed across the floor surface.

4. The open-flame oven of any one of the preceding claims, wherein during operation of the open-flame oven, heat from the cooking chamber is conducted through the floor, causing air in the secondary chamber to be heated.

5. The open-flame oven of any one of the preceding claims, wherein the outlet opening of the airflow duct is arranged at a periphery of the floor surface and/or at the base of an upright peripheral wall of the cooking chamber.

6. The open-flame oven of any one of the preceding claims, wherein the housing further comprises an oven mouth for the cooking chamber, the cooking chamber and the floor surface extending rearwardly from the oven mouth within the housing, and wherein the outlet opening of the airflow duct is arranged at a lateral side of the floor surface with respect to the oven mouth.

7. The open-flame oven of any one of the preceding claims, further comprising a fuel rack configured to be disposed on the floor surface, the fuel rack having a support surface for supporting solid fuel above the floor surface such that an airflow passage is formed between the support surface and the floor surface, optionally wherein the outlet opening of the airflow duct is positioned so as to expel air into the airflow passage.

8. The open-flame oven of any of the preceding claims, wherein the outlet opening of the duct comprises a grating arranged proximate to the floor surface and configured to direct airflow from the duct into the combustion region substantially parallel to the floor surface, optionally wherein the grating comprises a plurality of openings configured to direct airflow across the first surface of the floor.

9. The open-flame oven of any of the preceding claims, further comprising a blower disposed in fluid communication with the airflow duct to force airflow through the airflow duct, optionally wherein the blower is configured to receive air from the secondary chamber at a blower inlet of the blower and expel air at a blower outlet of the blower assembly.

10. The open-flame oven of claim 9, wherein the blower inlet is disposed on a first face of the blower and the outlet is disposed on a second face of the blower, the second face being adjacent to, and perpendicular to the first face.

11. The open-flame oven of any one of claims 9 or 10, wherein the blower comprises a controller, the controller being configured to:
vary a speed of the blower in response to receiving a blower speed command from a user; and/or
temporarily increase a speed of the blower to a defined speed and for a defined time duration in response to receiving a blower speed boost command from a user.

12. The open-flame oven of any one of claims 9 to 11, wherein the blower is comprised in a blower module, the blower module being a detachable component of the open-flame oven, the blower module being configured to detachably engage the housing of the open-flame oven.

13. The open-flame oven of any one of the preceding claims, wherein the open-flame oven comprises a component port formed in an exterior of the housing, the component port being in communication with the airflow duct, and further comprising a removable blanking component configured to block the component port, and optionally further comprising a removable blower module configured to be connected to the component port, wherein the removable blower module and the banking component are interchangeably connectable to the component port.

14. The open-flame oven of any of the preceding claims, further comprising a gas-fuel or liquid-fuel burner configured to heat the cooking chamber, optionally wherein the gas-fuel or liquid-fuel burner is arranged adjacent a first lateral wall of the cooking chamber, and wherein the outlet opening of the airflow duct is arranged adjacent a second lateral wall of the cooking chamber opposite the first lateral wall.

15. A blower module for an open-flame oven, the blower module connectable to a component port of a housing of the open-flame oven, the blower module comprising:
a blower inlet configured to be arranged within the housing of the open-flame oven whilst the blower module is connected to the component port, the blower inlet being configured receive air directly or indirectly from an internal chamber of the open-flame oven arranged below an oven floor;
a blower outlet configured to be arranged within the housing of the open-flame oven whilst the blower module is connected to the component port, the blower outlet being arranged above the blower inlet and configured to expel air directly or indirectly into a cooking chamber of the open-flame oven arranged above the oven floor; and
a blower configured to force air through the blower module from the blower inlet to the blower outlet, to thereby force air from the internal chamber into the cooking chamber, optionally wherein the blower module is configured to be received in the component port of the open-flame oven whilst in use, optionally wherein the blower module comprises an external face configured to be arranged flush with the oven housing whilst the blower module is received in the component port.
